# EUROPEAN PATENT SPECIFICATION

(11) **EP 0 418 969 B1**
(45) Date of publication and mention of the grant of the patent: **17.05.1995**
(21) Application number: 90202462.9
(22) Date of filing: 18.09.1990
(51) Int. Cl.: B60N 2/00

(54) **Seat equipped with a damped-oscillation lower resting cushion**
Sitz, versehen mit einem unteren Unterstützungskissen mit gedämpften Schwingungen
Siège équipé d'un coussin inférieur de support, à oscillations amorties

(30) Priority: 21.09.1989 IT 2178289
(43) Date of publication of application: 27.03.1991
(73) Proprietor: FIAT AUTO S.p.A., 10135 Torino (IT)
(72) Inventor: Villa, Ezio, I-20020 Arese, Milan (IT); Raffaele, Antonio, I-20020 Lainate, Milan (IT)
(74) Representative: Fusina, Gerolamo

(56) References cited:
- DE-A- 2 551 617
- DE-A- 3 000 433
- FR-A- 784 468
- GB-A- 2 029 213
- US-A- 2 470 907

## Description

The present invention is concerned with a seat equipped with a damped-oscillation lower resting cushion.

Seats, in particular seats for cars, trucks, tractors or special vehicles, are known in the art, which are equipped, in their overall structure, with oscillation damping means. Although they show high enough characteristics of comfort, such seats normally have outline dimensions which are by far larger than those of a normal car.

Furthermore, in the seats known from the prior art adjustment and damping means are provided in the back element thereof or in the complete seat structure, but the bottom cushion was never equipped with any independent systems for the elimination of the oscillations arising during vehicle travelling.

DE-A-3 000 433 shows a seat corresponding to the preamble of claim 1 wherein a container-tray-shaped element is connected with a framework by damping means at its rear end.

The purpose of the instant invention is hence of providing a seat equipped with suitable elements or devices which make it possible to eliminate, or at least to reduce considerably the disturbances which are due to the vertical oscillations arising during the use of the vehicle and are transmitted to the same seat.

This purpose according to the present invention is achieved by providing a seat with a damped-oscillation lower cushion according to claim 1.

The structural and functional features and the advantages of a seat with a damped-oscillation lower resting cushion according to the present invention will be better understood from the following exemplifying, non-limitative disclosure made by referring to the hereto attached drawings, wherein:
Figure 1 shows a schematic side view displaying the bottom resting cushion of a seat according to the present invention, in a first position of maximum lowering thereof;

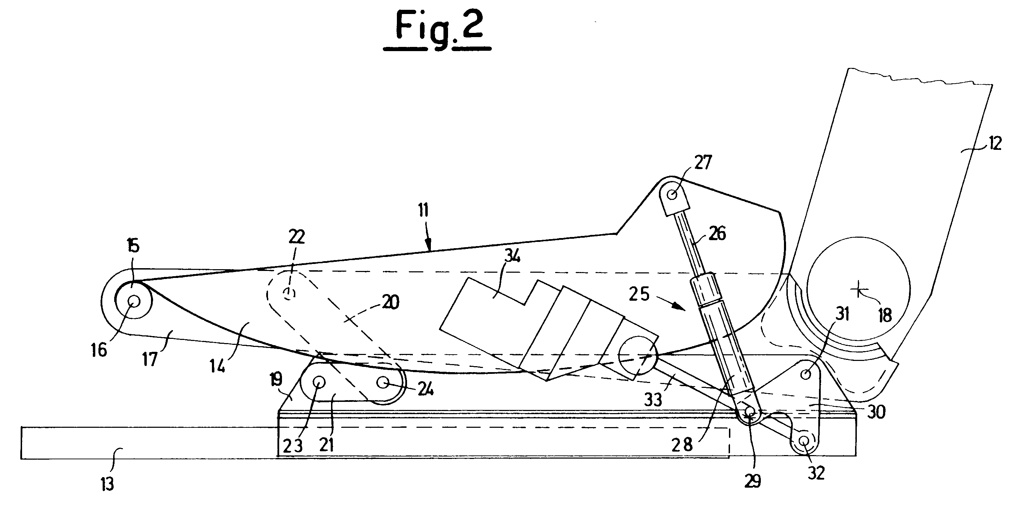

Figure 2 shows a view similar to the view of Figure 1, with the rear side of the cushion being in its lifted position; and
Figure 3 shows a view at all similar to the view of Figure 1, with the front side of the resting cushion being raised, in a second position thereof.

Referring to the figures, a seat, in particular a car seat, is essentially constituted by a lower resting cushion, generally indicated With the reference numeral 11, and a seat back, partially shown in 12, both of which are suitably constrained to an underlying support plane. In the herein depicted example, said elements are only constrained to said underlying support plane by means of fixed guides 13, which enable the whole seat to be moved backward and forward.

In particular, the bottom resting cushion 11 of a seat according to the present invention comprises an element having the shape of a container tray 14, inside which the stuffed portion of the seat (not shown in the figures) is housed. Said element 14 is hinged at the front end 15 thereof, which has a bent shape, above/around a pivot 16 which makes part of the seat framework or structure. More precisely, the pivot 16 constitutes a cross element which performs the task of connecting the side shoulders 17 with each other. Said side shoulders 17 can rotate, at their other end, around a rotation axis 18 which is also used as the lower rotation axis for the seat back 12.

Furthermore, each one of said shoulders 17 is connected on both sides with mobile side guides 19 by means of two levers 20, 21. One end of one (20) of said levers is articulated in 22 onto the same shoulders 17 and one end of the other lever is respectively articulated in 23 to the mobile guide 19, whilst the other ends of said two levers are hinged to each other in 24.

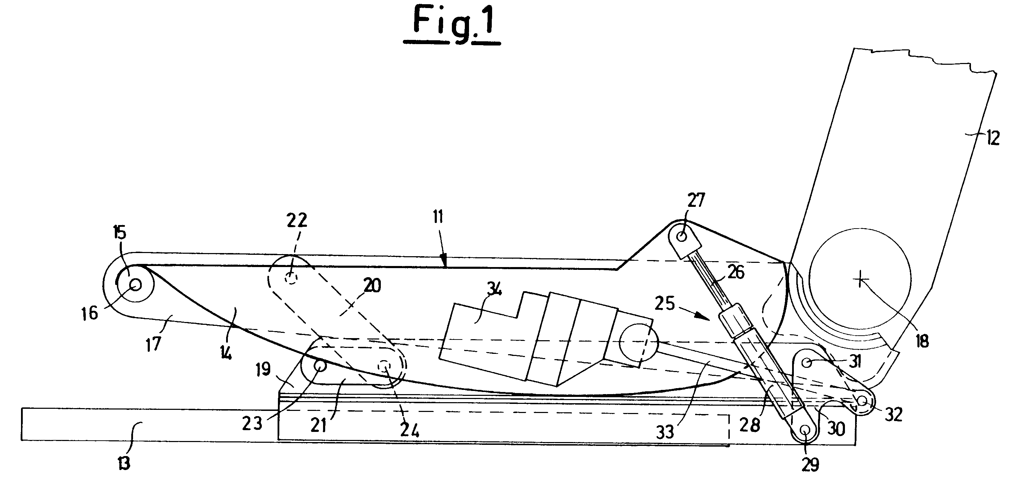

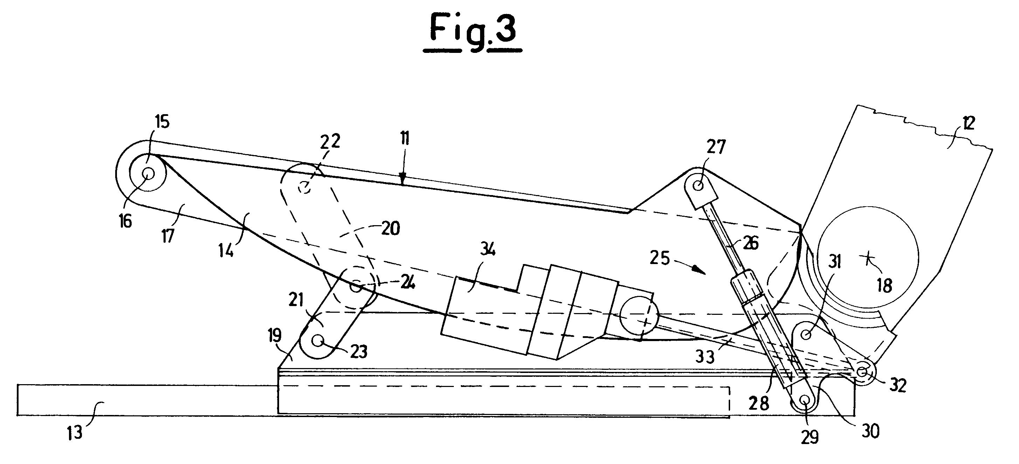

A lifting device for lifting the container-tray-shaped element between the fully lowered position shown in Figure 1 and the raised position shown in Figure 3, which can be of a whatever type, and is not specifically shown, promotes the positioning of the front end of the resting cushion 11.

The container-tray-shaped element 14 is connected, nearly at its other end, with the mobile guide 19 by means of interposed damping elements 25.

In particular, in the herein illustrated case, said damping elements 25 consist of two gas springs. A free end 26 of the stem of said gas springs is hinged in 27 to the container-tray-shaped element 14, and the container cylinder 28 thereof is hinged in 29 to a first, free end of a bell crank 30. An intermediate portion of the bell crank 30 is hinged in 31 to the mobile guide 19, such that the bell crank 30 can rock relatively to the same mobile guide.

The other end of said bell crank 30 is hinged in 32 to the end of a drive rod 33 of an actuator means, which causes said bell crank to oscillate. In the herein illustrated example, said actuator means is a small motor 34 which causes a nut screw (not shown in the figures) to revolve. In its turn, said revolving nut screw causes said drive rod 33 to shift, by interacting with an externally, complementarily threaded portion thereof.

Thus, a seat equipped with the damped-oscillation bottom resting cushion according to the present invention is capable of damping the oscillation of the "cushion" unit relatively to the "seat" unit, and at the same time enables adjustment of the height of the rear side of the cushion.

The movement of oscillation of the cushion takes place around the front cross pivot fastened to the base framework or to the shoulders of the seat, and said oscillation is controlled by the rear damping elements. In that way, the damping advantageously takes place at that portion of the cushion which is into contact with the seat back, onto which the weight of the person who occupies the seat rests.

The presence of the adjustment of the hinging point relatively to the seat framework, of the damping elements enables the occupier of the seat to adjust the position of the rear portion of the cushion, under non-operating conditions, at the preselected height which he will regard as being the most comfortable.

## Claims

1. Seat with a damped-oscillation lower cushion, in which said lower cushion (11) is housed inside an element shaped as a container tray (14) installed on the top of a base framework (17) of the seat which connects said container-tray-shaped element (14) with, and constrains it to, an underlying support plane, characterised in that at its front end (15) said container-tray-shaped element (14) is hinged to the base framework (17) and at its rear end, i.e. its end facing the seat back (12), said container-tray-shaped element (14) is connected with said base framework (17) by means of damping elements consisting of gas springs (25) which are independent from said seat back (12).

2. Seat according to claim 1, characterized in that said damping elements (25) are hinged to said base framework (17), with the interposition of means (28, 30) for adjusting the height of the point of application of said damping elements (25).

3. Seat according to claim 2, characterized in that said height adjustment means comprise an actuator means (28) which is constrained to a bell crank (30), fulcrumed (at 31) to said base framework (17) and bearing ends of said damping elements (25) hinged to an end thereof.

4. Seat according to claim 1, characterized in that the end of said container-tray-shaped element (14) has a bent portion (15) hooked in a hinge-wise fashion to a pivot (16) which is installed on the front portion of said base framework (17).

5. Seat according to claim 1, characterized in that said base framework (17) comprises mobile guides (19) sliding above fixed guides (13), wherein a lower end of said damping elements (25) is fastened to said mobile guides (19), with said container-tray-shaped element (14) being articulated and rocking at one of its ends relatively to side shoulders (17) which can be rotated at their other end around a revolution axis (18), which can be also used as the lower tilting pivot for a seat back (12).

6. Seat according to claim 5, characterized in that said side shoulders (17) and said mobile guides (19) are articulatedly connected on both sides to a pair of levers (20, 21), which in turn are articulatedly connected with each other.

## Patentansprüche

1. Sitz mit einem gedämpft schwingfähigen unteren Kissen, bei dem das untere Kissen (11) in einem als Behältertrog (14) geformten Element aufgenommen ist, das auf einem Basisgerüst (17) des Sitzes montiert ist, das das behältertrogförmige Element (14) mit einer darunter befindlichen Abstützebene verbindet und an dieser festlegt,
dadurch **gekennzeichnet**, daß das behältertrogförmige Element (14) an das Basisgerüst (17) angelenkt ist und an seinem hinteren Ende, d.h. dem der Rückenlehne (12) zugewandten Ende, mit dem Basisgerüst (17) durch aus Gasfedern (25) bestehende Dämpfungselemente verbunden ist, unabhängig von der Rückenlehne (12) sind.

2. Sitz nach Anspruch 1,
dadurch **gekennzeichnet,** daß die Dämpfungselemente (25) an dem Basisgerüst (17) angelenkt sind unter Zwischenfügung von Mitteln (28, 30) zum Einstellen der Höhe des Angriffspunktes der Dämpfungselemente (25).

3. Sitz nach Anspruch 2,
dadurch **gekennzeichnet,** daß die Höheneinstellmittel eine Stellvorrichtung (28) aufweist, die an dem Winkelhebel (30) festgelegt ist, der seinerseits bei (31) an dem Basisgerüst (17) drehbar gelagert ist, und die Enden der Dämpfungselemente (25, die an eine Seite seiner Enden angelenkt sind, lagert.

4. Sitz nach Anspruch 1,
dadurch **gekennzeichnet,** daß das Ende des behältertrogförmigen Elements (14) einen gekrümmten Abschnitt (15) aufweist, der scharnierartig in ein Drehlager (16) eingehängt ist, das am vorderen Teil des Basisgerüstes (17) montiert ist.

5. Sitz nach Anspruch 1,
dadurch **gekennzeichnet,** daß das Basisgerüst (17) bewegliche Führungen (19) aufweist, die auf festen Führungen (13) verschiebbar sind, wobei ein unteres Ende der Dämpfungselemente (25) an den beweglichen Führungen (19) befestigt ist, wobei das behältertrogförmige Element (14) an einem seiner Enden gelenkig gelagert und relativ zu Seitenschultern (17) schwingfähig ist, die an ihrem anderen Ende um eine Drehachse (18) drehbar sind, die gleichzeitig als unteres Kipplager für eine Rückenlehne (12) benutzt werden kann.

6. Sitz nach Anspruch 5,
dadurch **gekennzeichnet**, daß die Seitenschultern (17) und die beweglichen Führungen (19) gelenkig an beiden Seiten mit einem Paar von Hebeln (20, 21) verbunden sind, die ihrerseits gelenkig miteinander verbunden sind.

## Revendications

1. Siège muni d'un coussin inférieur à oscillations amorties dans lequel ledit coussin inférieur (11) est logé à l'intérieur d'un élément en forme de plateau-conteneur (14) installé sur le dessus d'un châssis de base (17) du siège qui relie ledit élément en forme de plateau-conteneur (14) avec et l'assujettit sur un plan de support sous-jacent, caractérisé en ce qu'à son extrémité avant (15), ledit élément en forme de plateau-conteneur (14) est articulé au châssis de base (17) et à son extrémité arrière, c'est-à-dire son extrémité en vis-à-vis du dossier du siège (12), ledit élément en forme de plateau-conteneur (14) est relié audit châssis de base (17) au moyen d'éléments d'amortissement se composant de ressorts à gaz (25) qui sont indépendants dudit dossier de siège (12).

2. Siège selon la revendication 1, caractérisé en ce que lesdits éléments d'amortissement (25) sont articulés audit châssis de base (17) avec l'interposition de moyens (28, 30) pour régler la hauteur du point d'application desdits éléments d'amortissement (25).

3. Siège selon la revendication 2, caractérisé en ce que lesdits moyens de réglage de hauteur comprennent un dispositif d'actionnement (28) qui est assujetti à un levier coudé (30) pivotant sur le châssis de base (17) et à des extrémités de support desdits éléments d'amortissement (25) articulés à une extrémité de celui-ci.

4. Siège selon la revendication 1, caractérisé en ce que l'extrémité dudit élément en forme de plateau-conteneur (14) présente une partie cintrée (15) accroçhée selon un mode à charnières à un pivot (16) qui est installé sur l'extrémité avant dudit châssis de base (17).

5. Siège selon la revendication 1, caractérisé en ce que ledit châssis de base (17) comprend des guides mobiles (19) coulissant au-dessus de guides fixes (13) où une extrémité inférieure desdits éléments d'amortissement (25) est fixée auxdits guides mobiles (19), ledit élément en forme de plateau-conteneur (14) étant articulé et basculant à une de ses extrémités par rapport à des épaulements latéraux (17) qui peuvent être tournés à leur autre extrémité autour d'un axe de révolution (18) qui peut être utilisé également comme le pivot d'inclinaison inférieur pour un dossier de siège (12).

6. Siège selon la revendication 5, caractérisé en ce que lesdits épaulements latéraux (17) et lesdits guides mobiles (19) sont reliés de façon articulée sur les deux côtés d'une paire de leviers (20, 21) qui à leur tour sont reliés de façon articulée les uns avec les autres.
